# FASCICULE DE BREVET EUROPEEN

(11) **EP 1 586 801 B1**
(45) Date de publication et mention de la délivrance du brevet: **11.10.2006**
(21) Numéro de dépôt: 05290802.7
(22) Date de dépôt: 12.04.2005
(51) Int. Cl.: F16L 41/06, B29C 65/78

(54) **Procédé et dispositif pour poser une prise de branchement sur une canalisation**
Verfahren und Vorrichtung zum Setzen eines Rohrabzweigstückes an eine Rohrleitung
Method and device for placing a branch pipe fitting onto a pipe

(30) Priorité: 15.04.2004 FR 0403947
(43) Date de publication de la demande: 19.10.2005
(73) Titulaire: GAZ DE FRANCE, 75017 Paris (FR)
(72) Inventeur: Bideault, Jean-Michel, 95630 Meriel (FR)
(74) Mandataire: Arnaud, Jean

(56) Documents cités:
- EP-A- 0 762 039
- WO-A-03/058111
- FR-A- 2 714 710
- US-A- 2 790 652

## Description

L'invention concerne un procédé pour poser, depuis le niveau du sol, une prise de branchement sur une canalisation et un dispositif destiné à cet effet.

Plus précisément, le dispositif sert à poser, depuis la partie supérieure d'un puits de fouille donnant accès à la canalisation, des prises de branchement sur des canalisations principales dans lesquelles circule un fluide tel notamment que du gaz ou de l'eau pour alimenter notamment une nouvelle habitation.

On connaît déjà un dispositif de pose, tel que décrit dans FR-A-2 714 710, dans lequel on réalise les opérations suivantes :
- creuser, depuis le sol, un puits de fouille de manière à dégager un tronçon de la canalisation,
- utiliser une prise de branchement comprenant une selle présentant une surface d'appui sensiblement hémicylindrique de section circulaire définie par un axe d'allongement,
- utiliser un dispositif comprenant :
   - un support,
   - des moyens de maintien reliés au support, pour maintenir la selle,
   - un sabot articulé en rotation par rapport au support, suivant un axe de rotation,
   - des moyens d'actionnement pour déplacer le sabot en rotation par rapport au support entre une position d'introduction et une position de pression,
- placer le sabot en position d'introduction,
- maintenir la selle principale sur le dispositif grâce aux moyens de maintien dans une position où l'axe d'allongement de la surface d'appui est sensiblement parallèle au premier axe de rotation,
- positionner la surface d'appui de la selle contre la canalisation,
- amener le sabot en position de pression en actionnant les moyens d'actionnement, afin de presser la selle contre la canalisation,
- souder la selle à la canalisation,
- retirer le dispositif de pose, mettre en communication la prise de branchement et la canalisation, retirer le dispositif de pose et reboucher le puits de fouille.

Ce procédé permet certes d'obtenir une bonne qualité de pose des prises de branchement. Toutefois, il nécessite d'utiliser un outil de pose lourd, encombrant et coûteux.

L'invention vise à faciliter la pose d'une prise de branchement et à en réduire le coût.

Conformément à l'invention, on réalise les opérations suivantes :
a) creuser, depuis le sol, un puits de fouille de manière à dégager un tronçon de la canalisation,
b) utiliser une prise de branchement comprenant une selle principale et une selle de fixation, la selle principale et la selle de fixation présentant chacune une surface d'appui sensiblement hémicylindrique de section circulaire définie par un axe d'allongement, un bord de maintien et un bord libre s'étendant parallèlement à leur axe d'allongement de part et d'autre de la surface d'appui, lesdits axes d'allongement étant sensiblement parallèles entre eux, la selle principale et la selle de fixation étant maintenues entre elles par leur bord de maintien, tandis que leurs bords libres sont mobiles l'un par rapport à l'autre par rotation autour d'un axe sensiblement parallèle auxdits axes d'allongement,
c) utiliser un dispositif comprenant :
   - un support,
   - des moyens de maintien reliés au support, pour maintenir la selle principale,
   - un sabot articulé en rotation par rapport au support, suivant un premier axe de rotation,
   - des moyens d'actionnement pour déplacer le sabot en rotation par rapport au support entre une position d'introduction et une position de pression,
d) placer le sabot en position d'introduction,
e) maintenir la selle principale sur le dispositif grâce aux moyens de maintien dans une position où les axes d'allongement des surfaces d'appui sont sensiblement parallèles au premier axe de rotation et la selle de fixation vient sensiblement au contact du sabot,
f) positionner la surface d'appui de la selle principale contre la canalisation,
g) amener le sabot en position de pression en actionnant les moyens d'actionnement, afin de presser la canalisation entre la selle principale et la selle de fixation,
h) fixer la selle principale et la selle de fixation ensemble autour de la canalisation,
i) souder la selle principale sur la canalisation, retirer le dispositif de pose, mettre en communication la prise de branchement et la canalisation, et reboucher le puits de fouille.

Ainsi, la pression à exercer entre la selle principale et la canalisation pour souder la selle principale n'est plus obtenue par la pression exercée par l'outil de pose, mais par la fixation de la selle principale avec la selle de fixation. Le dispositif de pose a par conséquent moins d'efforts à exercer et il peut être moins robuste tout en permettant de conserver une excellente qualité de pose. Le dispositif de pose est ainsi plus léger et moins encombrant. Sa manipulation est alors plus aisée, ce qui fatigue moins l'utilisateur, permet de poser plus rapidement les prises de branchement et réaliser des puits de fouille de dimensions plus réduites. Le gain de temps ainsi généré compense largement le temps nécessaire pour fixer la selle principale et la selle de fixation ensemble.

La présence de la selle de fixation n'augmente pas le temps nécessaire à la pose de la prise de branchement, dans la mesure où elle est reliée à la selle principale et vient se positionner automatiquement en regard de la selle principale lors du déplacement du sabot.

En outre, il n'est pas nécessaire de maintenir le dispositif de pose en place pour presser la selle principale sur la canalisation pendant toute la durée de l'électro-soudage et du refroidissement de la selle principale après soudage. Le dispositif de pose peut donc être retiré plus rapidement pour poser une autre prise de branchement. Le nombre de dispositifs de pose nécessaire pour poser un nombre de prises de branchement données se trouve ainsi réduit, ce qui génère une économie supplémentaire.

Avantageusement, lors de l'étape g) on amène les bords libres de la selle principale et de la selle de fixation à proximité l'un de l'autre et lors de l'étape h), on visse les bords libres de la selle principale et de la selle de fixation ensemble. La fixation de la selle principale et de la selle de fixation est ainsi aisée. De plus, elle permet d'exercer des pressions élevées entre la selle principale et la canalisation.

L'invention concerne en outre un dispositif. Conformément à l'invention, le dispositif comprend :
- un support,
- des moyens de maintien reliés au support, pour maintenir la selle principale,
- un sabot articulé en rotation par rapport au support, suivant un premier axe de rotation,
- des moyens d'actionnement pour déplacer le sabot en rotation par rapport au support entre une position d'introduction et une position de pression,
- un élément d'appui,
- des moyens d'articulation en rotation autour d'un deuxième axe de rotation, sensiblement parallèle au premier axe d'articulation, lesdits moyens d'articulation étant disposés entre l'élément d'appui et le sabot, ledit élément d'appui étant destiné à venir au contact de la selle de fixation pour l'amener au contact de la canalisation.

Ainsi, la selle de fixation est parfaitement guidée par rapport à la selle principale et vient se positionner parfaitement en regard de la selle principale lors du déplacement du sabot.

Afin de permettre à l'élément d'appui de se positionner automatiquement, par rotation autour du deuxième axe de rotation, de manière à offrir un guidage de la selle de fixation le plus efficace, conformément à l'invention, l'élément d'appui comprend une base, un premier patin présentant une première surface d'appui et un deuxième patin présentant une deuxième surface d'appui, lesdites surfaces d'appui définissant une forme évasée, lesdits patins étant reliés à la base, ladite base pivotant par rapport au sabot autour du deuxième axe de rotation, par l'intermédiaire des moyens d'articulation.

Ainsi, il n'est pas nécessaire de prévoir de moyens pour commander la rotation de l'élément d'appui par rapport au sabot par rotation autour du deuxième axe de rotation en fonction de la rotation du sabot par rapport au support autour du premier axe de rotation, puisque celle-ci s'effectue automatiquement de manière optimale.

Les deux patins permettent d'avoir deux surfaces de contact sur la selle de fixation distantes l'une de l'autre, ce qui favorise le guidage.

Selon une autre caractéristique conforme à l'invention, le premier patin est monté pivotant par rapport à la base autour d'un troisième axe de rotation sensiblement parallèle au premier axe de rotation. La surface de contact et le glissement relatif entre le premier patin et la selle de fixation sont augmentés, ce qui améliore encore l'obtention d'un positionnement satisfaisant de la selle de fixation par rapport à la selle principale.

Afin que ces avantages soient encore plus sensibles, conformément à l'invention, le deuxième patin est monté pivotant sur la base autour d'un quatrième axe de rotation sensiblement parallèle au premier axe de rotation.

Afin de pouvoir s'adapter à une large gamme de prises de branchement, correspondant notamment à des diamètres de canalisation différents, l'élément d'appui comprend des moyens de réglages pour translater le premier patin radialement au deuxième axe d'articulation.

Selon une caractéristique conforme à l'invention, le dispositif comprend en outre des moyens pour limiter l'amplitude des mouvements de rotation de l'élément d'appui par rapport au sabot.

L'amplitude de rotation utile de l'élément d'appui par rapport au sabot pendant que le sabot pivote par rapport au support n'est pas très grande (quelques dizaines de degrés tout au plus). Par conséquent, en limitant la rotation de l'élément d'appui par rapport au sabot à des mouvements de relativement faible amplitude, on le rend plus efficace dans son guidage de la selle de fixation et plus facile à manipuler.

Afin de pouvoir poser différents modèles de prise de branchement et notamment de pouvoir poser des prises de branchement sur des canalisations de différents diamètres, conformément à l'invention, le premier axe de rotation comprend plusieurs positions de réglage sur le sabot.

Et en particulier, conformément à l'invention, un ensemble comportant outre le dispositif, une prise de branchement comprenant une selle principale et une selle de fixation, est tel que dans la position de pression :
- la selle principale et la selle de fixation présentent chacune une surface d'appui hémicylindrique de section circulaire définie par un axe d'allongement, et l'axe d'allongement de la selle de fixation est sensiblement confondu avec l'axe d'allongement de la selle principale,
- l'axe d'allongement de la selle principale et l'axe d'allongement de la selle de fixation s'étendent sensiblement dans un plan défini par le premier axe de rotation et le deuxième axe de rotation.

Ainsi, lorsque le dispositif est à proximité de la position de pression, si on décompose le déplacement de l'élément d'appui par rapport à la canalisation en une composante radiale et une composante tangentielle, on s'aperçoit que la composante radiale est beaucoup plus grande que la composante tangentielle, les efforts correspondants étant inversement proportionnels ; ceci permet de réduire l'effort produit par les moyens d'actionnement pour une pression donnée exercée sur la canalisation, améliore encore le positionnement de la selle de fixation et réduit le choc lorsque la selle de fixation arrive en contact de la canalisation. Le dispositif pourra donc être plus robuste, moins coûteux et la qualité de pose améliorée.

L'invention va apparaître encore plus clairement dans la description qui va suivre, faite en référence aux dessins annexés dans lesquels :
- la figure 1 est une représentation schématique d'une première étape d'un procédé de pose d'une prise de branchement sur une canalisation conforme à l'invention,
- la figure 2 est une représentation à échelle agrandie d'une deuxième étape du procédé,
- la figure 3 est une représentation également à échelle agrandie d'une troisième étape du procédé,
- la figure 4 représente conformément à la figure 2, la deuxième étape du procédé, avec une canalisation de plus faible diamètre,
- la figure 5 représente la troisième étape du procédé de pose d'une prise de branchement sur la canalisation de la figure 4,
- la figure 6 représente en superposition la troisième étape du procédé conformément aux figures 3 et 5.

Les figures illustrent un dispositif 1 comprenant essentiellement un support 36, un sabot 40 articulé en rotation par rapport au support 36 autour d'un premier axe de rotation 42 (perpendiculaire au plan des figures), un vérin 44 et un élément d'appui 50.

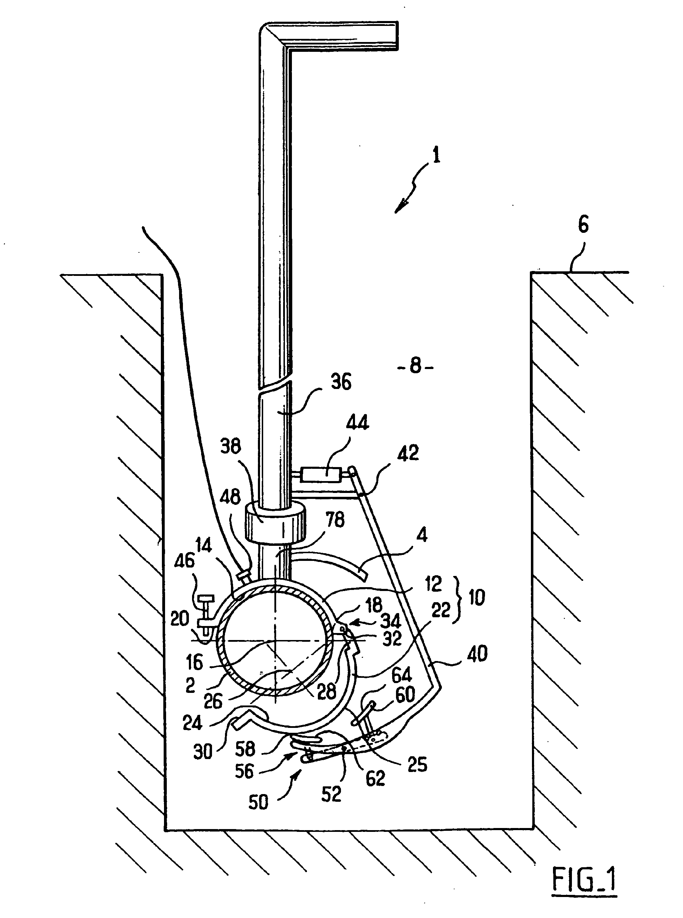

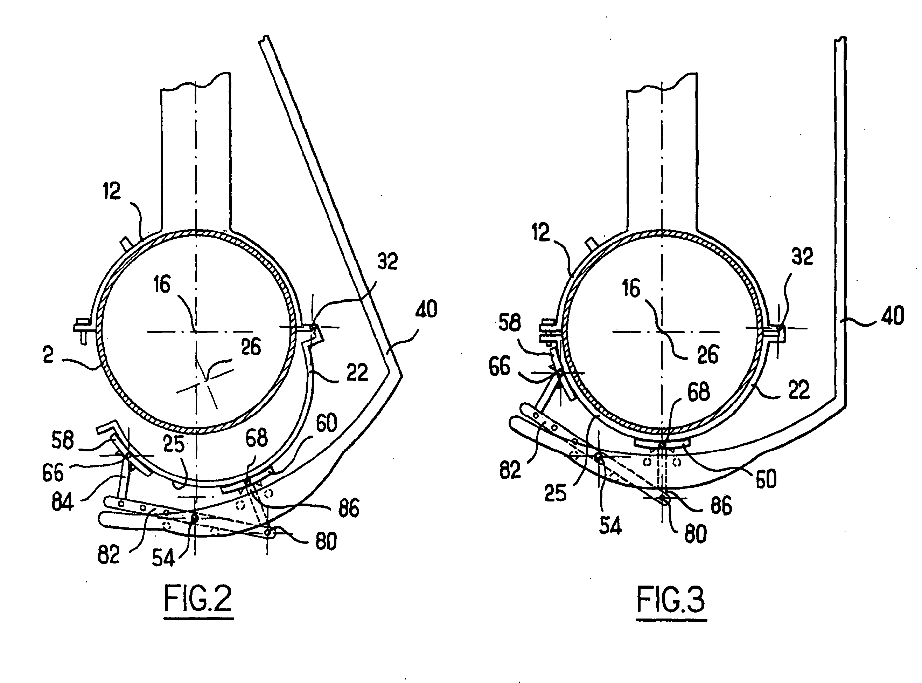

Le vérin 44 s'étend entre le support 36 et le sabot 40 pour déplacer le sabot entre une position d'introduction illustrée à la figure 1 et une position de pression illustrée aux figures 3, 5 et 6.

Le dispositif 1 comprend en outre un adaptateur 38 relié au support 36 de manière libérable, et vissé à l'extrémité du fût 78 d'une selle principale 12 d'une prise de prise de branchement 10.

La selle principale 12 présente une surface d'appui 14 sensiblement hémicylindrique de section circulaire présentant un axe d'allongement 16, un bord de maintien 18 et un bord libre 20. Le bord de maintien 18 et le bord libre 20 sont disposés de part et d'autre de la surface d'appui 14 et s'étendent suivant l'axe d'allongement 16. Le fût 78 s'étend sensiblement perpendiculairement à l'axe d'allongement 16 et présente un passage intérieur débouchant dans la surface d'appui 14, sensiblement perpendiculairement à cette dernière. Ledit passage intérieur communique avec une conduite de dérivation 4 destiné à être reliée à nouveau point de branchement.

La prise de branchement 10 comprend en outre une selle de fixation 22. La selle de fixation 22 présente une surface d'appui 24 et une surface extérieure 25 sensiblement hémicylindriques de section circulaire présentant un axe d'allongement 26, un bord de maintien 28 et un bord libre 30. La surface d'appui 24 de la selle de fixation est sensiblement complémentaire de la surface d'appui 14 de la selle principale. Le bord de maintien 28 et le bord libre 30 sont disposés de part et d'autre de la surface d'appui 24 et de la surface extérieure 25. Ils s'étendent sensiblement suivant l'axe d'allongement 26.

La selle de fixation 22 est articulée en rotation par rapport à la selle principale 12 autour d'un axe d'articulation 32, par une articulation de type chape 34, reliant ensemble le bord de maintien 18 de la selle principale et le bord de maintien 28 de la selle de fixation. L'axe d'articulation 32 est sensiblement parallèle aux directions d'allongement 16, 26.

Afin de poser une prise de branchement 10 sur une canalisation 2, la prise de branchement 10 est reliée à la conduite de dérivation 4, le dispositif 1 est placé dans la position d'introduction, et la prise de branchement 10 est maintenue sur le dispositif 1, par l'intermédiaire de l'adaptateur 38, dans une position telle que les axes d'allongement 16, 26 et l'axe d'articulation 32 sont disposés sensiblement parallèlement au premier axe de rotation 42. La surface extérieure 25 de la selle inférieure 22 vient sensiblement alors au contact de l'élément d'appui 50.

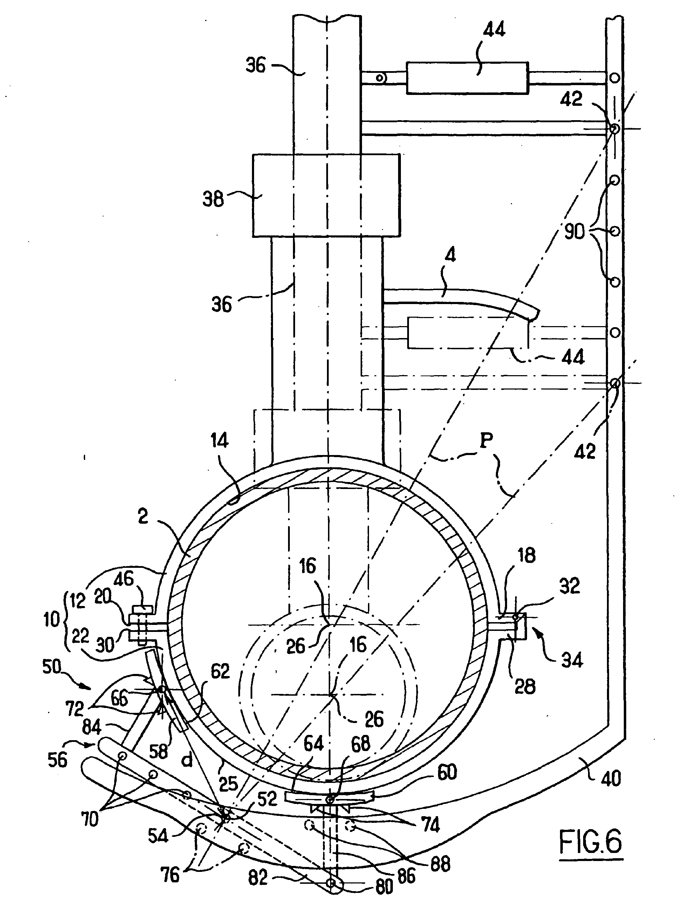

Tel qu'illustré plus précisément à la figure 6, l'élément d'appui 50 comprend une base 56, un premier patin 58 et un deuxième patin 60. La base 56 comporte un élément transversal 82, un premier élément intermédiaire 84 et un deuxième élément intermédiaire 86. L'élément transversal 82 est articulé en rotation par rapport au sabot 40 par l'intermédiaire d'une tige 52 maintenue dans le sabot 40 et passant à travers un alésage réalisé dans l'élément transversal 82. Cette tige 52 s'étend suivant un deuxième axe de rotation 54 (perpendiculaire au plan des figures) sensiblement parallèle au premier axe de rotation 42. Des butées 76 sont prévues sur le sabot 40 pour limiter l'amplitude de rotation de l'élément transversal 82 par rapport au sabot 40.

Le premier patin 58 présente une surface d'appui 62 concave. Il est monté pivotant autour d'un troisième axe de rotation 66, sensiblement parallèle au premier axe de rotation 42, sur le premier élément intermédiaire 84. Des cales 72 sont disposées sur le premier patin 58, du côté opposé à la surface d'appui 62, à proximité du troisième axe de rotation 66, afin de limiter l'amplitude de la rotation du premier patin par rapport au premier élément intermédiaire 84.

Le premier élément intermédiaire 84 est fixé de manière libérable sur l'élément transversal 82. Il peut en effet être fixée sur l'élément transversal 82 en différents points de réglages 70 disposés suivant une direction radiale au deuxième axe de rotation 54, afin de pouvoir modifier la distance d entre le troisième axe de rotation 66 et le deuxième axe de rotation 54.

Le deuxième patin 60 présente une surface d'appui 64 concave. Il est monté pivotant autour d'un quatrième axe de rotation 68, sensiblement parallèle au premier axe de rotation 42, sur le deuxième élément intermédiaire 86. Des cales 74 sont disposées sur le deuxième patin 60, du côté opposé à la surface d'appui 64, à proximité du quatrième axe de rotation 68, afin de limiter l'amplitude de la rotation du deuxième patin 60 par rapport au deuxième élément intermédiaire 86.

Le deuxième élément intermédiaire 86 est monté pivotant autour d'un cinquième axe de rotation 80, sensiblement parallèle au premier axe de rotation 42, sur l'élément transversal 82. Des butées 88 sont prévues sur le sabot 40 pour guider le deuxième élément intermédiaire 86 par rapport au sabot 40 et limiter l'amplitude de sa rotation autour du cinquième axe de rotation 80.

La distance d entre le troisième axe de rotation 66 et le deuxième axe de rotation 54 est réglée en fonction du diamètre de la canalisation 2.

Les mobilités en rotation de l'élément d'appui 50 autour du deuxième axe de rotation 54, du troisième axe de rotation 66, du quatrième axe de rotation 68 et du cinquième axe de rotation 80, ainsi que les différents moyens 76, 72, 74, 88 de limitation de l'amplitude de rotation autour de ces axes de rotation permettent de bien positionner les surfaces d'appui 62, 64 sur la surface extérieure 25 de la selle de fixation 22. Ces surfaces d'appui 62, 64 définissent une forme évasée.

Après avoir creusé un puits de fouille 8 depuis le sol 6, de manière à dégager un tronçon de la canalisation 2, le dispositif 1 avec la selle principale 12 maintenue sur le support 36 par l'adaptateur 38 est descendu dans le puits de fouille 8, le sabot 40 en position d'introduction.

La surface d'appui 14 de la selle principale 12 est positionnée contre la canalisation 2, le sabot 40 est ensuite amené en position de pression par rotation autour du premier axe de rotation 42, en actionnant le vérin 44.

Le premier patin 58 et le deuxième patin 60 se déplacent automatiquement pour guider au mieux la surface extérieure 25 de la selle de fixation 22 dans sa rotation autour de l'axe d'articulation 32, jusqu'à ce que son bord libre 30 vienne en regard du bord libre 20 de la selle principale 12 et qu'ils pressent la canalisation 2 entre la selle principale 12 et la selle de fixation 22.

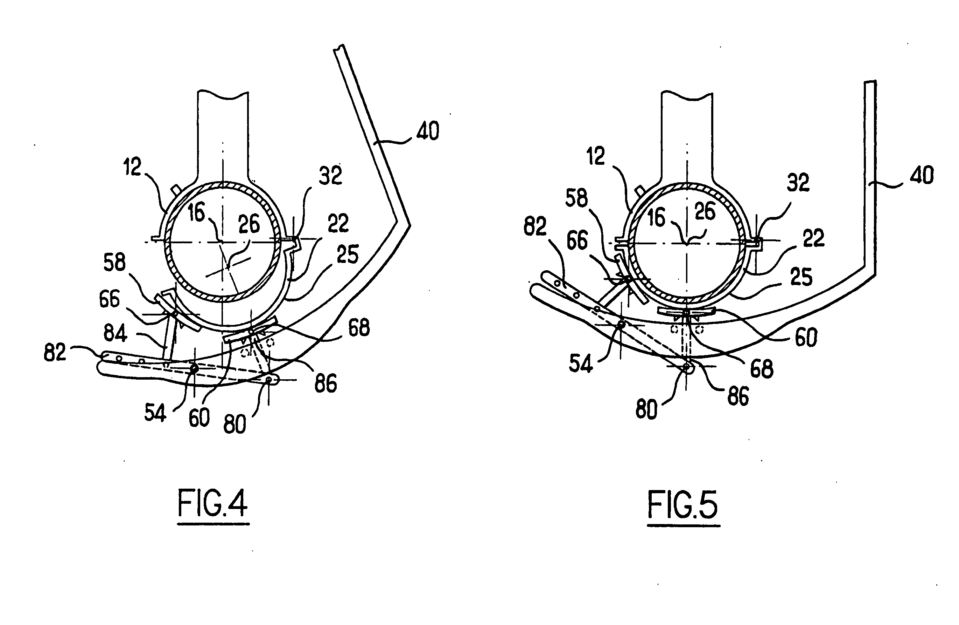

La figure 6 illustre le dispositif de pose avec le sabot 40 en position de pression. La canalisation 2 illustrée aux figures 2 et 3 est représentée en trait fort sur cette figure 6, tandis que la canalisation 2 de plus faible diamètre, représentée aux figures 4 et 5 est illustrée en trait fantôme (mixte) sur cette figure 6.

Tel qu'illustré, le premier axe de rotation 42 présente plusieurs positions de réglage 90 sur le sabot 40 pour s'adapter aux différents diamètres de canalisation.

La position du support 36 et du vérin 44 dans le cas de la canalisation 2 illustrée aux figures 4 et 5 est illustrée en trait fantôme (mixte)

Lorsque le sabot 40 est en position de pression, les axes d'allongement 16, 26 de la selle principale 12 et de la selle de fixation 22 sont sensiblement confondus et s'étendent à proximité du plan P passant par le premier axe de rotation 42 et le deuxième axe de rotation 54, quelque soit le diamètre de la canalisation 2.

Le bord libre 20 de la selle principale 12 est ensuite fixé au bord libre de la selle de fixation 22 à l'aide de vis de fixation 46.

Le sabot 40 est alors amené en position d'introduction et retiré du puits de fouille 8, en désaccouplant l'adaptateur 38 du support 36. L'adaptateur est ensuite retiré en le dévissant de l'extrémité du fût 78 de la selle principale.

La selle principale 12 est ensuite soudée sur la canalisation au moyen d'une résistance électrique (non représentée) noyée dans la selle principale 12 à proximité de la surface d'appui 14 et de connecteurs électriques 48. Puis, on met la conduite de dérivation 4 en communication avec la canalisation 2 via le fût 78 en perçant la canalisation 2, avantageusement au moyen d'un perforateur intégré au fût 78. Enfin, on rebouche le puits de fouille 8.

Avantageusement, la canalisation 2 présente un diamètre compris sensiblement entre 50 millimètres et 250 millimètres, la prise de branchement 10 et la canalisation étant en matériau plastique, tel que du polyéthylène.

Bien entendu, l'invention n'est nullement limitée à la réalisation qui vient d'être décrite à titre d'exemple non limitatif. Ainsi, on pourrait prévoir que la selle de fixation 22 soit relativement flexible autour d'une direction de flexion sensiblement parallèle à son axe d'allongement 26 et se dispenser de l'articulation 34 entre la selle principale et la selle de fixation. L'axe d'articulation 32 entre la selle principale 12 et la selle de fixation 22 serait alors défini par ladite direction de flexion.

## Revendications

1. Procédé pour poser, depuis le niveau du sol (6), une prise de branchement (10) sur une canalisation (2), dans lequel on réalise les opérations suivantes :
a) creuser, depuis le sol (6), un puits de fouille (8) de manière à dégager un tronçon de la canalisation (2),
b) utiliser une prise de branchement (10) comprenant une selle principale (12) et une selle de fixation (22), la selle principale (12) et la selle de fixation (22) présentant chacune une surface d'appui (14, 24) sensiblement hémicylindrique de section circulaire définie par un axe d'allongement (16, 26), un bord de maintien (18, 28) et un bord libre (20, 30) s'étendant parallèlement à leur axe d'allongement (16, 26) de part et d'autre de la surface d'appui (14, 24), lesdits axes d'allongement (16, 26) étant sensiblement parallèles entre eux, la selle principale (12) et la selle de fixation (22) étant maintenues entre elles par leur bord de maintien (18, 28), tandis que leurs bords libres (20, 30) sont mobiles l'un par rapport à l'autre par rotation autour d'un axe d'articulation (32) sensiblement parallèle auxdits axes d'allongement (16, 26),
c) utiliser un dispositif (1) comprenant :
• un support (36),
• des moyens de maintien (38) reliés au support (36), pour maintenir la selle principale (12),
• un sabot (40) articulé en rotation par rapport au support (36), suivant un premier axe de rotation (42),
• des moyens d'actionnement (44) pour déplacer le sabot (40) en rotation par rapport au support (36) entre une position d'introduction et une position de pression,
d) placer le sabot (40) en position d'introduction,
e) maintenir la selle principale (12) sur le dispositif (1) grâce aux moyens de maintien (38) dans une position où les axes d'allongement (16, 26) des surfaces d'appui (14, 24) sont sensiblement parallèles au premier axe de rotation (42) et la selle de fixation (22) vient sensiblement au contact du sabot (40),
f) positionner la surface d'appui (14) de la selle principale (12) contre la canalisation (2),
g) amener le sabot (40) en position de pression en actionnant les moyens d'actionnement (44), afin de presser la canalisation (2) entre la selle principale (12) et la selle de fixation (22),
h) fixer la selle principale (12) et la selle de fixation (22) ensemble autour de la canalisation (2),
i) souder la selle principale (12) sur la canalisation (2), retirer le dispositif de pose (1), mettre en communication la prise de branchement et la canalisation et reboucher le puits de fouille.

2. Procédé selon la revendication 1, **caractérisé en ce que** :
- lors de l'étape g), on amène le bord libre (20) de la selle principale (12) et le bord libre (30) de la selle de fixation (22) à proximité l'un de l'autre, et
- lors de l'étape h), on fixe les bords libres (20, 30) de la selle principale (12) et de la selle de fixation (22) ensemble par vissage (46).

3. Dispositif en particulier pour la mise en oeuvre du procédé selon la revendication 1 ou la revendication 2, ledit dispositif comprenant :
- un support (36);
- des moyens de maintien (38) reliés au support (26), pour maintenir la selle principale (12),
- un sabot (40) articulé en rotation par rapport au support (36), suivant un premier axe de rotation (42),
- des moyens d'actionnement (44) pour déplacer le sabot (40) en rotation par rapport au support (36) entre une position d'introduction et une position de pression,
- un élément d'appui (50),
ledit dispositif étant **caractérisé par** des moyens d'articulation en rotation (52) autour d'un deuxième axe de rotation (54), sensiblement parallèle au premier axe de rotation (42), lesdits moyens d'articulation (52) étant disposés entre l'élément d'appui (50) et le sabot (40), ledit élément d'appui (50) étant destiné à venir au contact de la selle de fixation (22) pour l'amener au contact de la canalisation (2).

4. Dispositif selon la revendication 3, **caractérisé en ce que** l'élément d'appui (50) comprend une base (56), un premier patin (58) présentant une première surface d'appui (62) et un deuxième patin (60) présentant une deuxième surface d'appui (64), lesdites surfaces d'appui (62, 64) définissant une forme évasée, lesdits patins (58, 60) étant reliés à la base (56), ladite base (56) pivotant par rapport au sabot (40) autour du deuxième axe de rotation (54), par l'intermédiaire des moyens d'articulation (52).

5. Dispositif selon la revendication 4, **caractérisé en ce que** le premier patin (58) est monté pivotant par rapport à la base (56) autour d'un troisième axe de rotation (66) sensiblement parallèle au premier axe de rotation (42).

6. Dispositif selon la revendication 5, **caractérisé en ce que** le deuxième patin (60) est monté pivotant sur la base (56) autour d'un quatrième axe de rotation (68) sensiblement parallèle au premier axe de rotation (42).

7. Dispositif selon l'une quelconque des revendications 4 à 6, **caractérisé en ce que** l'élément d'appui (50) comprend des moyens de réglages (70) pour translater le premier patin radialement au deuxième axe d'articulation (54).

8. Dispositif selon l'une quelconque des revendications 3 à 7, **caractérisé en ce que** le dispositif (1) comprend en outre des moyens (72, 74) pour limiter l'amplitude des mouvements de rotation de l'élément d'appui (50) par rapport au sabot (40).

9. Dispositif selon l'une quelconque des revendications 3 à 8, **caractérisé en ce que** le premier axe de rotation (42) comprend plusieurs positions de réglage (90) sur le sabot (40).

10. Ensemble comportant le dispositif (1) selon la revendication 9 et une prise de branchement (10) comprenant une selle principale (12) et une selle de fixation (22), **caractérisé en ce que** dans la position de pression :
- la selle principale (12) et la selle de fixation (22) présentent chacune une surface d'appui (14, 24) hémicylindrique de section circulaire définie par un axe d'allongement (16, 26), et l'axe d'allongement (26) de la selle de fixation (22) est sensiblement confondu avec l'axe d'allongement (16) de la selle principale (12),
- l'axe d'allongement (16) de la selle principale (12) et l'axe d'allongement (26) de la selle de fixation (22) s'étendent sensiblement dans un plan (P) défini par le premier axe de rotation (42) et le deuxième axe de rotation (54).

## Claims

1. Method for positioning, from the level of the ground (6), a branch connection (10) on a pipeline (2), in which the following operations are carried out:
a) digging an exploration hole (8) from the ground (6) in order to open up a portion of the pipeline (2),
b) using a branch connection (10) which comprises a main plate (12) and a fixing plate (22), the main plate (12) and the fixing plate (22) each having a substantially semi-cylindrical support surface (14, 24) which has a circular cross-section defined by an extension axis (16, 26), a retaining edge (18, 28) and a free edge (20, 30) which extends parallel with the extension axis (16, 26) thereof at one side and the other of the support surface (24, 24), the extension axes (16, 26) being substantially parallel with each other, the main plate (12) and the fixing plate (22) being held together by the retaining edge (18, 28) thereof, whilst the free edges (20, 30) thereof can be moved relative to each other by means of rotation about an axis of articulation (32) which is substantially parallel with the extension axes (16, 26),
c) using a device (1) which comprises:
. a support (36)
. retaining means (38) which are connected to the support (36) in order to retain the main plate (12),
. a foot (40) which is articulated so as to rotate relative to the support (36) about a first axis of rotation (42),
. actuation means (44) for displacing the foot (40) in rotation relative to the support (36) between an introduction position and a pressing position,
d) placing the foot (40) in an introduction position,
e) retaining the main plate (12) on the device (1) using means (38) for retaining in a position in which the extension axes (16, 26) of the support surfaces (14, 24) are substantially parallel with the first axis of rotation (42) and the fixing plate (22) substantially comes into contact with the foot (40),
f) positioning the support surface (14) of the main plate (12) against the pipeline (2),
g) bringing the foot (40) into a pressing position by operating the actuation means (44) in order to press the pipeline (2) between the main plate (12) and the fixing plate (22),
h) fixing the main plate (12) and the fixing plate (22) together around the pipeline (2),
i) welding the main plate (12) to the pipeline (2), removing the positioning device (1), placing the branch connection and the pipeline in communication and refilling the exploration hole.

2. Method according to claim 1, **characterised in that**:
- during step g), the free edge (20) of the main plate (12) and the free edge (30) of the fixing plate (22) are brought close to each other, and
- during step h), the free edges (20, 30) of the main plate (12) and the fixing plate (22) are fixed together by means of screwing (46).

3. Device, in particular for implementing the method according to claim 1 or claim 2, the device comprising:
- a support (36),
- retaining means (38) which are connected to the support (26) in order to retain the main plate (12),
- a foot (40) which is articulated so as to rotate relative to the support (36) about a first axis of rotation (42),
- actuation means (44) for displacing the foot (40) in rotation relative to the support (36) between an introduction position and a pressing position,
- a support element (50),
said device being **characterised by** means (52) for articulating in rotation about a second axis of rotation (54) which is substantially parallel with the first axis of rotation (42), said articulation means (52) being arranged between the support element (50) and the foot (40), said support element (50) being intended to come into contact with the fixing plate (22) in order to bring it into contact with the pipeline (2).

4. Device according to claim 3, **characterised in that** the support element (50) comprises a base (56), a first skid-like member (58) which has a first support surface (62) and a second skid-like member (60) which has a second support surface (64), the support surfaces (62, 64) defining a divergent shape, the skid-like members (58, 60) being connected to the base (56), the base (56) pivoting relative to the foot (40) about the second axis of rotation (54), by means of the articulation means (52).

5. Device according to claim 4, **characterised in that** the first skid-like member (58) is mounted so as to pivot relative to the base (56) about a third axis of rotation (66) which is substantially parallel with the first axis of rotation (42).

6. Device according to claim 5, **characterised in that** the second skid-like member (60) is mounted so as to pivot on the base (56) about a fourth axis of rotation (68) which is substantially parallel with the first axis of rotation (42).

7. Device according to any one of claims 4 to 6, **characterised in that** the support element (50) comprises adjustment means (70) for translating the first skid-like member radially relative to the second axis of articulation (54).

8. Device according to any one of claims 3 to 7, **characterised in that** the device (1) further comprises means (72, 74) for limiting the extent of the rotation movements of the support element (50) relative to the foot (40).

9. Device according to any one of claims 3 to 8, **characterised in** the first axis of rotation (42) comprises a plurality of adjustment positions (90) on the foot (40).

10. Assembly comprising the device (1) according to claim 9 and a branch connection (10) which comprises a main plate (12) and a fixing plate (22), **characterised in that**, in the pressing position:
- the main plate (12) and the fixing plate (22) each have a semi-cylindrical support surface (14, 24) having a circular cross-section defined by an extension axis (16, 26), and the extension axis (26) of the fixing plate (22) is substantially aligned with the extension axis (16) of the main plate (12),
- the extension axis (16) of the main plate (12) and the extension axis (26) of the fixing plate (22) extend substantially in a plane (P) defined by the first axis of rotation (42) and the second axis of rotation (54).

## Patentansprüche

1. Verfahren zum Setzen eines Rohrabzweigstückes (10) an einer Rohrleitung (2) vom Bodenniveau (6) aus, in welchem man die folgenden Tätigkeiten durchführt :
a) Aushöhlen eines Aushubschachtes (8) vom Boden (6) aus, derart, daß ein Rohrleitungsabschnitt (2) freigelegt wird,
b) Verwenden eines Rohrabzweigstückes (10) mit einem Hauptsattel (12) und einem Befestigungssattel (22), wobei der Hauptsattel (12) und der Befestigungssattel (22) jeder eine im wesentlichen halbzylindrische Stützfläche (14, 24) von kreisrundem Querschnitt, die durch eine Längsachse (16, 26) bestimmt wird, einen Halterand (18, 28) und einen freien Rand (20, 30) aufweist, der sich parallel zu ihrer Längsachse (16, 26) auf beiden Seiten der Stützfläche (14, 24) erstreckt, wobei sich die Längsachsen (16, 26) im wesentlichen parallel zueinander erstrecken, der Hauptsattel (12) und der Befestigungssattel (22) untereinander durch ihren Halterand (18, 28) gehalten werden, während ihre freien Ränder (20, 30) zueinander durch Drehung um eine Gelenkachse (32) beweglich sind, die zu den Längsachsen (16, 26) im wesentlichen parallel ist,
c) Verwenden einer Vorrichtung (1) mit:
• einer Stütze (36),
• Haltemitteln (38), die mit der Stütze (36) zum Halten des Hauptsattels (12) verbunden sind,
• einem Schuh (40), der in Drehung bezüglich der Stütze (36) einer ersten Drehachse (42) folgend, drehbar angelenkt ist,
• Betätigungsmitteln (44), um den Schuh (40) in Drehung bezüglich der Stütze (36) zwischen einer Einführposition und einer Druckposition zu versetzen,
d) Plazieren des Schuhs (40) in Einführposition,
e) Halten des Hauptsattels (12) auf der Vorrichtung (1) mittels Haltemitteln (38) in einer Position, in der die Längsachsen (16, 26) der Stützoberflächen (14, 24) im wesentlichen parallel zu der ersten Drehachse (42) sind, und der Befestigungssattel (22) im wesentlichen in Kontakt mit dem Schuh (40) kommt,
f) Positionieren der Stützoberfläche (14) des Hauptsattels (12) gegen die Rohrleitung (2),
g) den Schuh (40) durch Betätigen der Betätigungsmittel (44) in Druckposition bringen, um die Rohrleitung (2) zwischen den Hauptsattel (12) und den Befestigungssattel (22) zu pressen,
h) Befestigen des Hauptsattels (12) und des Befestigungssattels (22) gemeinsam um die Rohrleitung (2),
i) Schweißen des Hauptsattels (12) an die Rohrleitung (2), Zurückziehen der Anbringungsvorrichtung (1), Verbinden des Rohrabzweigstückes und der Rohrleitung und Zuschütten des Aushubschachtes.

2. Verfahren hach Anspruch 1, **dadurch gekennzeichnet, daß** man:
- während des Schrittes g) den freien Rand (20) des Hauptsattels (12) und den freien Rand (30) des Befestigungssattels (22) nahe aneinander bringt, und
- während des Schrittes h) die freien Ränder (20, 30) des Hauptsattels (12) und des Befestigungssattels (22) durch Schrauben (46) miteinander befestigt.

3. Vorrichtung insbesondere zur Ausführung des Verfahrens nach Anspruch 1 oder nach Anspruch 2, wobei die Vorrichtung aufweist:
- eine Stütze (36),
- Haltemittel (38), die mit der Stütze (26) zum Halten des Hauptsattels (12) verbunden sind,
- einen Schuh (40), der bezüglich der Stütze (36) einer ersten Drehachse (42) folgend, drehbar angelenkt ist,
- Betätigungsmittel (44), um den Schuh (40) bezüglich der Stütze (36) zwischen einer Einführposition und einer Druckposition drehend zu versetzen,
- ein Stützelement (50),
wobei die Vorrichtung durch Gelenkmittel in Drehung (52) um eine zweite Drehachse (54) **gekennzeichnet** ist, die sich im wesentlichen parallel zu der ersten Drehachse (42) befindet, wobei die Gelenkmittel (52) zwischen dem Stützelement (50) und dem Schuh (40) angeordnet sind, und das Stützelement (50) dazu bestimmt ist, mit dem Befestigungssattel (22) in Kontakt zu kommen, um ihn mit der Rohrleitung (2) in Kontakt zu bringen.

4. Vorrichtung nach Anspruch 3, **dadurch gekennzeichnet, daß** das Stützelement (50) eine Basis (56), eine erste Unterlage (58) mit einer ersten Stützfläche (62) und eine zweite Unterlage (60) mit einer zweiten Stützfläche (64) aufweist, wobei die Stützflächen (62, 64) eine bauchige Form bestimmen, die Unterlagen (58, 60) mit der Basis (56) verbunden sind, und die Basis (56) bezüglich des Schuhs (40) um die zweite Drehachse (54) mittels Gelenkmitteln (52) schwenkt.

5. Vorrichtung nach Anspruch 4, **dadurch gekennzeichnet, daß** die erste Unterlage bzw. Kufe (58) bezüglich der Basis (56) schwenkend um eine dritte Drehachse (66) im wesentlichen parallel zu der ersten Drehachse (42) montiert ist.

6. Vorrichtung nach Anspruch 5, **dadurch gekennzeichnet, daß** die zweite Unterlagen bzw. Kufe (60) schwenkend an der Basis (56) um eine vierte Drehachse (68) im wesentlichen parallel zu der ersten Drehachse (42) montiert ist.

7. Vorrichtung nach einem der Ansprüche 4 bis 6, **dadurch gekennzeichnet, daß** das Stützelement (50) Steuerungsmittel (70) aufweist, um die erste Kufe radial zu der zweiten Gelenkachse (54) zu verschieben.

8. Vorrichtung nach einem der Ansprüche 3 bis 7, **dadurch gekennzeichnet, daß** die Vorrichtung (1) ferner Mittel (72, 74) aufweist, um die Amplitude der Drehbewegungen des Stützelementes (50) bezüglich des Schuhs (40) zu begrenzen.

9. Vorrichtung nach einem der Ansprüche 3 bis 8, **dadurch gekennzeichnet, daß** die erste Drehachse (42) mehrere Steuerungspositionen (90) auf dem Schuh (40) aufweist.

10. Aufbau mit der Vorrichtung 1 nach Anspruch 9 und einem Rohrabzweigstück (10), das einen Hauptsattel (12) und einen Befestigungssattel (22) aufweist, **dadurch gekennzeichnet, daß** in der Druckposition:
- der Hauptsattel (12) und der Befestigungssattel (22) jeder eine halbzylindrische Stützfläche (14, 24) mit kreisrundem Querschnitt aufweisen, welche durch eine Längsachse (16, 26) bestimmt ist, und die Längsachse (26) des Befestigungssattels (22) im wesentlichen mit der Längsachse (16) des Hauptsattels (12) zusammenfallen,
- sich die Längsachse (16) des Hauptsattels (12) und die Längsachse (26) des Befestigungssattels (22) im wesentlichen in einer Ebene (P) erstrecken, die durch die erste Drehachse (42) und die zweite Drehachse (54) bestimmt wird.
